# EUROPEAN PATENT APPLICATION

(11) **EP 2 196 749 A1**
(43) Date of publication of application: **16.06.2010**
(21) Application number: 09177771.4
(22) Date of filing: 02.12.2009
(51) Int. Cl.: F25B 31/00, F25B 39/04

(54) **Stand-alone refrigeration machine with inverter-driven variable-speed compressor and liquid-cooled condenser**

(30) Priority: 09.12.2008 IT PD20080365
(71) Applicant: Carel Industries S.r.l., 35020 Brugine (PD) (IT)
(72) Inventor: Nalini, Luigi, 35121, Padova (IT); Lamanna, Biagio, 35100, Padova (IT)
(74) Representative: Modiano, Micaela Nadia

(57) **Abstract**

A stand-alone refrigeration machine with variable-speed compressor (11) driven by an inverter (12) and a condenser (13, 113, 213) cooled with a liquid that is fed to it by a refrigeration circuit (14), the inverter (12) being refrigerated by a cold element (15) of the condenser (13, 113, 213) with which it is in intimate contact.

## Description

The present invention relates to a stand-alone refrigeration machine with inverter-driven variable-speed compressor and liquid-cooled condenser.

The display and distribution to the public of foodstuffs in supermarkets currently uses refrigerated displays for displaying fresh food and frozen food containers, which depending on the type of goods to be preserved have different operating temperatures.

In some cases the refrigerated displays are connected to central compressor units, which draw the refrigerant in the vapor state from the various refrigerated displays, compress it, condense it and finally send it in the liquid state to the refrigerated displays.

In such displays it is expanded by means of a throttling element and evaporated, producing the refrigeration capacity that is needed to maintain the operating temperature of the refrigerated display.

Therefore, this currently known type of system is composed of refrigerated displays and of one or more central compression units, which optionally work at different evaporation temperatures to serve refrigerated displays at different operating temperatures, and of a refrigerant conveyance network, which comprises a branch for aspirating the vapor from the refrigerated displays to the central compression units and a branch for distributing the liquid by the central units to each one of the refrigerated displays.

Such refrigerated displays are provided with a thermostat-controlled throttling element and are supplied by means of a solenoid valve selectively; such valve in fact introduces the refrigerant during the period of activity and is closed when the desired operating temperature for the refrigerated display that it serves is reached.

These types of system have drawbacks, which include the fact that they are composed of extensive networks of tubes, which depending on the configuration of the installation site and on the number of refrigerated displays that they serve, are often complicated and quite extensive, accordingly having frequent leaks of refrigerant and considerable load losses in the ducts, to the full disadvantage of refrigeration efficiency.

Moreover, these networks of tubes require an effective insulation of the refrigerant intake tubes in order to avoid the formation of frost on their surface.

Central condensing and compressor units are further bulky and require adapted installation rooms, which are therefore taken from the surface intended for the refrigerated displays and therefore for sales.

Moreover, they are sized so as to supply refrigerant at the required temperature and pressure to the refrigerated display that operates in the most onerous conditions, and are therefore oversized as regards the other refrigerated displays that they supply.

One currently known alternative solution, aimed at obviating these drawbacks, consists of stand-alone refrigerated displays with air-based condensation.

These refrigerated displays comprise a complete refrigeration machine; therefore, in addition to the evaporator and the throttling element they also comprise the refrigerant compressor and condenser.

The condenser faces the surrounding environment in order to exchange heat by convection, which is optionally forced by a fan.

The compressor is sized so as to provide the maximum refrigeration capacity that can be required by the refrigerated display and therefore is activated and deactivated selectively by a thermostatic control that operates it on the basis of the internal temperature of the refrigerated display.

In this manner, with respect to central condensation and compressor units, each refrigerated display has an installed capacity that is proportional to its operating conditions.

Stand-alone refrigerated displays with air-based condensation, therefore, are currently generally appreciated; however, they are used scarcely in installations that require high refrigerating capacities or a large number of displays, since they have a considerable acoustic disturbance caused by the compressor and by the fan of the condenser and induce considerable heating of the room in which they are arranged, due to the heat flow dissipated by the condenser.

A further known solution is constituted by stand-alone refrigerated displays with water-based condensation, which have a condenser that is cooled by a flow of water that is recirculated through a central cooling unit.

Such central unit, for the cooling of the refrigeration water of the condensers, can be equipped with an external radiator or with an evaporation tower or with a remote refrigeration unit with refrigeration cycle.

One of the advantages of this solution is that it allows the acoustic insulation of the refrigeration machine of the display, which no longer has the condenser exposed to the environment.

Moreover, the water-based cooling system does not require particular solutions such as the thermal insulation of the piping, and is therefore simple to provide and to maintain even if it is provided in a complex layout.

However, even in these types of refrigerated display the compressor is operated discontinuously, because it is sized to cope with the most challenging refrigeration capacity demands and therefore is oversized for operation in conditions of normal use.

The compressor is in fact operated in periods of activity and deactivated when the refrigeration capacity that it generates has allowed to reach the predefined thermal condition for the refrigerated display that it serves.

One currently known solution to this drawback is constituted by stand-alone refrigerated displays with variable-speed compressor.

These displays are equipped with compressors driven by inverters, which allow their variable-speed operation over a wide range of conditions, up to conditions ranging from 25% to 100% of maximum speed.

The adjustment of the delivered refrigeration capacity is obtained therefore by modulating the speed of the compressor as a function of the instantaneous demand, which is monitored by one or more probes installed in the refrigerated display.

In this manner, the delivered refrigeration capacity is always equal to the capacity that is required at each instant, which is normally much lower than the maximum capacity, i.e., the capacity for which the compressor is sized.

Thus, the amounts of heat exchanged at the evaporator and at the condenser also are lower than those exchanged by refrigerated displays of the type already described, for which in fact they always correspond to the maximum values related to the operating temperatures.

Accordingly, the evaporation temperature of each refrigerated display always corresponds to the maximum related to the chosen operating temperature.

Likewise, the condensation temperature is at the lowest possible value.

The reduction of the thermal variations thus obtained in the two exchangers and the consequent reduction of the compression ratio of the refrigeration cycle leads to a considerable increase in the overall energy efficiency of the refrigerated display.

Moreover, since the evaporation temperature is the highest possible one allowed by the instantaneous requirements, the formation of frost on the surface of the evaporator is reduced, limiting onerous defrosting operations.

Since they are stand-alone, refrigerated displays with variable-speed compressor also can be equipped with air- or water-based condensers, as described.

However, these refrigerated displays require, in addition to the cooling of the condenser of the refrigeration machine, the cooling of the power semiconductors of the inverter, and this generally requires approximately 5-10% of the electric power absorbed by the compressor.

The inverters currently used are cooled by means of a fan that ventilates a heat sink provided with fins, which is in mechanical contact with the power semiconductors of the inverter.

However, this solution has drawbacks, constituted by the electric power absorption of the fan, by its noise and by the fact that it is exposed to soiling caused by dust and any volatile greasy residues, which are typically present in rooms assigned to food distribution.

These technical problems and solutions described so far and applied to the field of refrigerated displays are generally common also to stand-alone refrigeration machines with water-cooled condenser and variable-speed compressor, used in various fields such as for example process conditioning units for the conditioning of rooms for accommodating electronic equipment, such as servers and the like.

The aim of the present invention is to provide a stand-alone refrigeration machine with liquid-cooled condenser and variable-speed compressor that allows to obviate these drawbacks, allowing effective cooling of the inverter with a lower energy consumption than currently known solutions.

Within this aim, an object of the invention is to propose a stand-alone refrigeration machine that allows to maintain a durable cooling efficiency of the inverter, requiring smaller maintenance interventions than currently known refrigerated displays.

Another object of the invention is to provide a refrigeration machine that allows to use an inverter that is more compact than the ones currently used for an equal capacity that can be delivered.

Another object of the invention is to propose a refrigeration machine that is structurally simple and easy to use and can be manufactured with relatively low costs.

This aim, as well as these and other objects which will become better apparent hereinafter are achieved by a stand-alone refrigeration machine with inverter-driven variable-speed compressor and condenser cooled with a liquid that is fed to it by a refrigeration circuit, characterized in that said inverter is refrigerated by a cold element of said condenser with which it is in intimate contact.

Further characteristics and advantages of the invention will become better apparent from the following detailed description of some preferred but not exclusive embodiments of the refrigerated display according to the invention, illustrated by way of non-limiting example in the accompanying drawings, wherein:

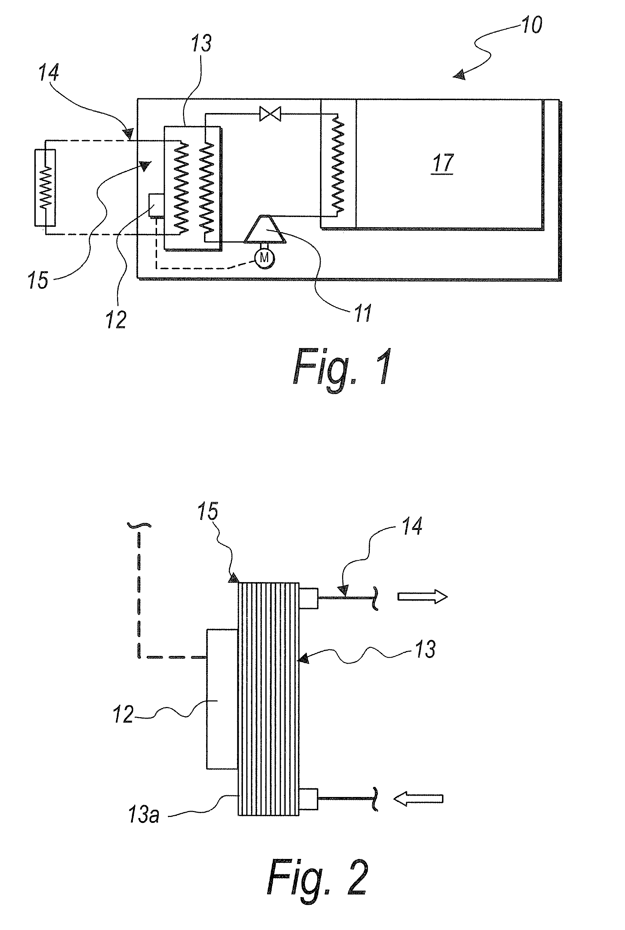

Figure 1 is a simplified diagram of a refrigeration machine according to the invention;
Figure 2 is a diagram of a detail of the refrigeration machine according to the invention in a first embodiment;

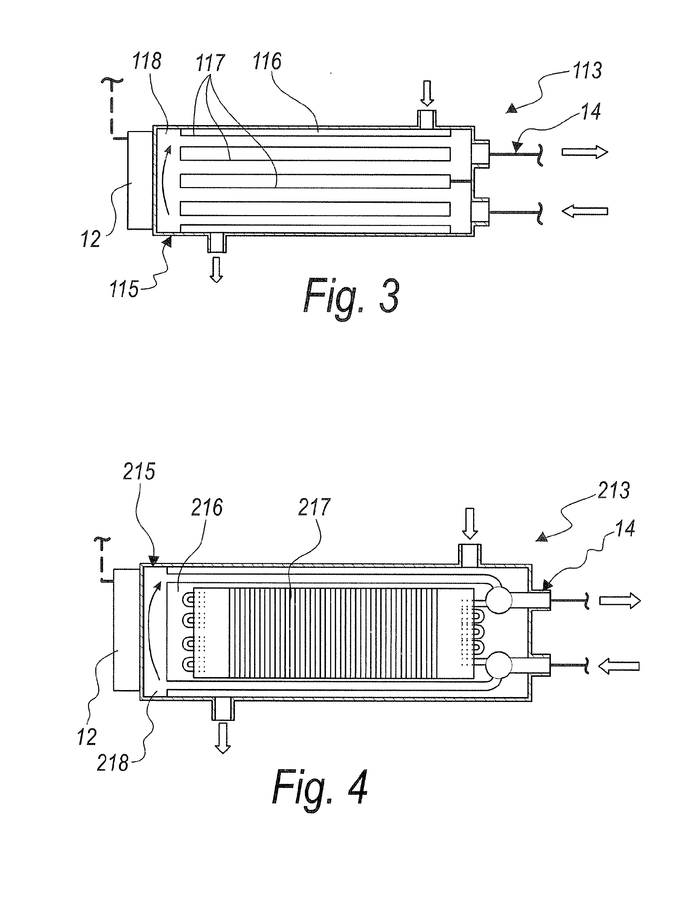

Figure 3 is a diagram of a detail of the refrigeration machine according to the invention in a second embodiment;
Figure 4 is a diagram of a detail of the refrigeration machine according to the invention in a third embodiment.

It is noted that anything found to be already known during the patenting process is understood not to be claimed and to be the subject of a disclaimer.

With reference to the figures, the reference numeral 10 generally designates a stand-alone refrigeration machine with variable-speed compressor 11 driven by an inverter 12 and a condenser 13 refrigerated by means of a liquid, for example water, which is fed to it by a refrigeration circuit 14.

The refrigerated display 10 according to the invention has a particularity in that the inverter 12 is refrigerated by a cold element 15 of the condenser 13, with which it is in intimate contact.

The condenser 13 is conveniently of the plate type and the cold element 15 comprises an exchange plate 13a thereof that is refrigerated by liquid that is fed by the refrigeration circuit 14, to which the inverter 12 adheres.

In a second embodiment, the condenser 113 is preferably of the shell and tube type with a refrigerant that flows out into a shell 116 and tubes 117 that are supplied with liquid by the refrigeration circuit 14.

The cold element 115 conveniently comprises a refrigeration chamber 118, to which the inverter 12 adheres, which is crossed by the liquid that it receives from the tubes 117 to which it is functionally connected.

This embodiment, thanks to the large internal volume of the shell 116, has the advantage of being able to avoid the use of a tank to collect the condensed refrigerant, fully to the advantage of simplicity and space occupation of the circuit for the outflow of the refrigerant.

In a third and substantially equivalent embodiment, the condenser 213 advantageously comprises
- a shell 216 for the outflow of refrigerant,
- an exchanger 217 provided with fins, for the outflow of liquid that is fed by the refrigeration circuit 14, accommodated within the shell 216.

The cold element 215 advantageously comprises a chamber 218 for cooling the inverter 12, to which it adheres, functionally connected to the refrigeration circuit 14 in parallel to the exchanger.

With respect to the second described embodiment, in this third embodiment the heat exchange surface on the refrigerant side is increased greatly, with a considerable benefit for the reduction of the overall temperature variation.

Moreover, like the second described embodiment, this one, too, has the advantage of being able to avoid the use of a tank to collect the condensed refrigerant, allowing to obtain a circuit for the outflow of the refrigerant that is simple and compact.

Moreover, this third embodiment is simpler to manufacture, requiring therefore less labor, fully to the advantage of its low cost.

The operation of the refrigeration machine 10 according to the invention is as follows.

In use, the refrigeration capacity required to preserve the products arranged in a compartment 17 of the refrigerated display 10 is provided by means of the compressor 11 driven by the inverter 12.

The inverter is cooled by a liquid and in particular by the same flow of liquid that is used for the refrigeration of the condenser 13 or 113 or 213, depending on the embodiment of the refrigeration machine 10 according to the invention.

In particular, depending on these embodiments, the heat flow generated by the power semiconductors of the inverter 12 is absorbed by the flow of liquid that outflows in a cooling plate 16 or in an exchange plate 13 a of the condenser 13, which is provided with plates, or again in a refrigeration chamber 118 or in a cooling chamber 318, formed in a condenser 113, or correspondingly in a condenser 213.

With respect to stand-alone refrigerated displays with liquid-cooled condenser and variable-speed compressor driven by an inverter, a refrigeration machine according to the invention does not require fans for cooling the inverter, which is in fact liquid-cooled more efficiently than refrigeration by ventilation.

Thus, in a refrigeration machine according to the invention the temperature of the dissipation surface of the semiconductors of the inverter is substantially lower than 60°C, significantly lower than the temperature that is normally obtained by air cooling, which is approximately 100°C, fully to the advantage of durability and maximum power that can be delivered for an equal size of the inverter.

In practice it has been found that the invention achieves the intended aim and objects, providing a stand-alone refrigeration machine, with liquid-cooled condenser and variable-speed compressor, which allows to obtain an effective cooling of the inverter with a lower energy consumption than currently known solutions, thanks to the higher efficiency of liquid cooling.

Further, a stand-alone refrigeration machine according to the invention allows to maintain a durable cooling efficiency of the inverter, requiring smaller maintenance interventions than currently known refrigerated displays.

Moreover, a refrigeration machine according to the invention can be equipped with a more compact inverter than those currently used for an equal power that can be delivered.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2008A000365 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stand-alone refrigeration machine with variable-speed compressor (11) driven by an inverter (12) and a condenser (13, 113, 213) cooled with a liquid that is fed to it by a refrigeration circuit (14), **characterized in that** said inverter (12) is refrigerated by a cold element (15) of said condenser (13, 113, 213) with which it is in intimate contact.

2. The refrigeration machine according to claim 1, **characterized in that** said condenser (13) is of the plate type, said cold element (15) comprising an exchange plate (13a) that is refrigerated by liquid that is fed by said refrigeration circuit (14), said inverter (12) adhering to said plate.

3. The refrigeration machine according to claim 1, **characterized in that** said condenser (113) is of the shell and tube type with refrigerant that flows in the shell (116), and tubes (117) which are fed with liquid by said refrigeration circuit (14), said cold element (15) comprising a refrigeration chamber (118), which is crossed by said liquid and is functionally connected to said tubes (117).

4. The refrigeration machine according to claim 1, **characterized in that** said condenser (213) comprises
- a shell (216) for the outflow of refrigerant,
- an exchanger (217) provided with fins for the outflow of liquid that is fed by said refrigeration circuit (14), accommodated in said shell (216),
said cold element (215) comprising a chamber (318) for cooling said inverter (12), to which it adheres, said chamber being functionally connected to said refrigeration circuit (14) in parallel to said heat exchanger (217) provided with fins.
